# EUROPEAN PATENT SPECIFICATION

(11) **EP 3 374 123 B1**
(45) Date of publication and mention of the grant of the patent: **09.10.2019**
(21) Application number: 16801151.8
(22) Date of filing: 09.11.2016
(51) Int. Cl.: B23K 35/28, B23K 1/00, B23K 15/00, B23K 35/02, B32B 15/01, C22C 21/00, F28F 21/08, C22F 1/04, B23K 101/14, B21B 3/00, C22C 21/02, C22C 21/04, C22C 21/10, C22F 1/043, C22F 1/053

(54) **BRAZING SHEET AND PRODUCTION METHOD**
LÖTBLECH UND HERSTELLUNGSVERFAHREN
FEUILLE DE BRASAGE ET PROCÉDÉ DE PRODUCTION

(30) Priority: 13.11.2015 WO PCT/CN2015/094596; 18.01.2016 WO PCT/CN2016/071207
(43) Date of publication of application: 19.09.2018
(73) Proprietor: Gränges AB, 114 85 Stockholm (SE)
(72) Inventor: DESIKAN, Sampath, Tolworth Surbiton KT6 7NU (GB); WEIZENG, Ma, Putuo District Shanghai (CN)
(74) Representative: Valea AB
(86) International application number: PCT/EP2016/077058
(87) International publication number: WO 2017/081043

(56) References cited:
- EP-A2- 2 253 726
- WO-A1-2007/131727
- US-A1- 2009 165 901

## Description

The present invention relates to an aluminium alloy brazing sheet with adequate corrosion performance at thin gauge and a process for its production. The invention further relates to use of the brazing sheet for the manufacturing of a brazed heat exchanger and a brazed heat exchanger made from the brazing sheet.

Brazed aluminium heat exchangers such as radiators, condensers, evaporators etc. are commonly used in automotive engine cooling or air conditioning systems as well as in industrial cooling systems. They usually include of a number of parallel tubes (welded/folded/multi chamber etc.) with each tube joined typically at either end to headers. Corrugated fins brazed to the tubes separate any two adjacent tubes and transfer heat between the tube walls to a gaseous medium outside the tubes, such as ambient air.

In order to save weight, the trend goes towards thinner gauge materials, which increases the demand for resistance against corrosion, particularly for the tubes.

The prior art discloses use of a sacrificial cladding of a less noble aluminium alloy on the inside of the tubes. Such a cladding usually contains Zn in order to lower the corrosion potential (i.e. rendering it more negative). Examples of disclosures of these kind of materials include WO2007/042206 A1, WO2007/131727 A1, WO2010/132018 A1, EP2418042 A1, EP1666190 A1, EP2130934 A1, JP2003268470 A, JP2005232506 A, JP2007216283 A, JP2008127607 A, US8932728 B2, US2010/0291400 A1 and US2011/0287277 A1.

In order to improve the protection against outside corrosion a core of a so called long life alloy, having very low content of Si, may be used to enable the formation of a sacrificial "brown band" at brazing. However, in the production of alloys with such low amount of Si the proportion of recycled scrap that can be used is limited, which is disadvantageous from a sustainability point of view.

Improved corrosion resistance can also be achieved by including a further layer between the core and the sacrificial cladding, but such brazing sheets are more complicated to produce.

It is an object of the invention to provide a brazing sheet suitable for thin gauge tubes in brazed heat exchangers that after brazing have adequate resistance against corrosion from both sides but still can be efficiently produced from raw materials including significant amounts of scrap.

It is a further object of the invention to provide a brazing sheet comprising a core layer and a sacrificial cladding attached directly to one side of the core layer and a braze cladding attached directly to the other side of the core layer.

It has been found that these objects can be achieved by a brazing sheet comprising a core layer made of a first aluminium alloy, attached to one side of said core layer a sacrificial cladding made of a second aluminium alloy, attached to the other side of said core layer a braze cladding made of a third aluminium alloy, wherein said first aluminium alloy consists of:
Si 0.2-1.0 wt%; Fe 0.15-0.9 wt%; Cu 0.2-0.9 wt%; Mn 1.0-1.6 wt%; Mg ≤0.3 wt%; Cr 0.05-0.15 wt%; Zr 0.05-0.25 wt%; Ti 0.05-0.25 wt%; other elements ≤0.05 wt% each and ≤0.2 wt% in total; Al balance up to 100 wt%;
said second aluminium alloy consists of: Si 0.45-1.0 wt%; Fe ≤0.4 wt%; Cu ≤0.05 wt%; Mn 1.2-1.8 wt%; Ti≤0.10 wt%, Zn 1.3-5.5 wt%; Zr 0.05-0.20 wt%; other elements ≤0.05 wt% each and ≤0.2 wt% in total; Al balance up to 100 wt%; and,
said third aluminium alloy has a melting point lower than said first and second aluminium alloys. Particularly, the liquidus temperature of the third aluminium alloy is lower than the solidus temperatures of the first and of the second aluminium alloys.

Other elements refer to any elements present as impurities. Such elements are difficult to avoid due to impurities in the raw materials used for making the alloys, particularly when significant amounts of recycled scrap is used as is the normal practice in full scale production. Such elements may, for example, include impurities of one or more of V, Ni, Sr, etc.

For any description of alloy compositions or preferred alloy compositions, all references to percentages are by weight percent (wt%) unless otherwise indicated.

The term "sheet" as used herein also include coiled strips.

Properties after brazing refer to properties of the brazing sheet, or any article made by shaping the brazing sheet, after it has been brazed at a temperature of 600°C for 3 minutes.

The brazing sheet of the invention is particularly suitable as a tube stock material with the sacrificial cladding forming the inside of the tubes made from the brazing sheet. Preferably there is no braze cladding on top of the sacrificial cladding, i.e. no braze cladding at the inside of the tube. The brazing sheet is preferably a three layer material with no further layers in addition to the core, the sacrificial cladding and the braze cladding. The total thickness of the brazing sheet is preferably from 0.15 to 0.6 mm, more preferably from 0.15 to 0.25 mm and most preferably from 0.18 to 0.22 mm. Preferably the sacrificial cladding constitutes from 3 to 20 %, more preferably from 4 to 15 % and most preferably from 5 to 12 % of the total thickness of the brazing sheet. Preferably the braze cladding constitutes from 3 to 20 %, most preferably from 5 to 15 % of the total thickness of the brazing sheet.

It has been found that the special combination of the composition of the core alloy (i.e. the first aluminium alloy) and the composition of the sacrificial cladding alloy (i.e. the second aluminium alloy) enables production from material with high proportion of scrap, particularly scrap containing Si and Fe, at the same time as, after brazing, acceptable resistance against corrosion attacks from both sides of a tube made from the brazing sheet is achieved. The brazing sheet of the invention thus has adequate protection against corrosion in spite of the fact that the Si and Mn content in the core alloy preferably are set so no sacrificial brown band (an area of the core close to the interface against the braze cladding comprising Mn and Si containing particles formed by penetration of Si from the braze cladding through solid solution) is formed at brazing. It is also possible to produce the brazing sheet by rolling without increased risk for bending in the rolling line caused by too high differences in deformation resistance between the layers.

After brazing, the core contains intermetallic particles comprising Cr, particularly particles also comprising Al, Fe, Mn and Cu. Preferably, after brazing also the residual braze cladding contains intermetallic particles comprising Cr, particularly particles also comprising Al, Fe, Mn and Cu. Intermetallic particles referred to above preferably have an average mean equivalent diameter in the range from 0.5 to 10 µm. It could have been expected that AlFeCuMn particles would create a potential difference increasing the corrosion. However, it has been found that the material of the invention, comprising Cr containing particles, shows improved resistance to particularly pitting corrosion.

Before brazing, the brazing sheet has good formability so that different designs of brazed and/or folded tubes can be made, such as B-type or multi-port tubes.

The core alloy comprises 0.2-1.0 wt%, preferably >0.2-1.0 wt% (i.e. from more than 0.2 up to 1.0 wt%) of Si. Most preferably the content of Si is 0.25-1.0 wt%, particularly 0.3-1.0 wt%. The comparatively high amount of Si means that no sacrificial brown band is formed at brazing. On the other hand it is possible to use comparatively high amounts of scrap contaminated with Si for producing the alloy. This means that less primary aluminium is required, which is beneficial from a sustainability point of view. Too high content of Si lowers the melting temperature to an unacceptable degree.

The core alloy comprises 0.15-0.9 wt%, preferably >0.2-0.7 wt% (i.e. from more than 0.2 up to 0.7 wt%) of Fe. The specified content of Fe enables use of comparatively high amounts of scrap contaminated with Fe. Too high content of Fe leads to formation of large intermetallic particles.

The core alloy comprises 0.2-1.0 wt%, preferably 0.4-0.8 wt% of Cu. The presence of Cu increases the strength and increases the corrosion potential. However, too high content of Cu increases the sensitivity to hot cracking during casting, lowers the solidus temperature and may also increase the susceptibility of the materials to intergranular corrosion after brazing.

The core alloy comprises 1.0-1.6 wt%, preferably 1.1-1.5 wt% of Mn. The presence of Mn in the core increases the strength, particularly when present in particles but to some extent also in solid solution. At a sufficiently high Mn content in the core, a large number of particles can be precipitated during preheating and subsequent hot rolling during production of the brazing sheet, and after brazing a substantial potential gradient between the core and sacrificial cladding can be obtained because of the large difference of Mn in solid solution. Too high content of Mn may lead to large primary particles being formed during casting, which is undesirable in the manufacture of thin material.

The core alloy comprises ≤0.3 wt%, preferably ≤0.2wt% of Mg, most preferably ≤0.15 wt%, e.g. 0.05-0.15 wt% of Mg. The presence of magnesium improves the strength of the material, but at too high amounts the brazeability is worsened, particularly when using flux at controlled atmosphere brazing (CAB), such as in the Nocoloc™ method.

The core alloy comprises 0.05-0.15 wt%, preferably 0.06-0.13 wt% of Cr. It has been found that Cr, after brazing, is included not only in intermetallic particles in the core, but preferably also in resolidified material from the braze cladding. The presence of intermetallic Cr containing particles has been found improving the resistance against corrosion. Too high amount of Cr leads to undesirable giant primary intermetallic particles adversely affecting the hot rolling behaviour of the materials.

The core alloy comprises 0.05-0.25 wt%, preferably 0.06-0.15 of Zr. The presence of of Zr causes an increased number of very fine particles, promoting development of relatively large elongated grains after brazing, which is beneficial for the corrosion resistance. Too high content of Zr leads to large intermetallic particle formation during casting and thereby loss of the beneficial role of Zr.

The core alloy comprises 0.05-0.25 wt%, preferably 0.06-0.15 wt% of Ti. The presence of Ti improves the corrosion resistance by promoting layer-by-layer corrosion. Too high content of Ti leads to giant intermetallic particle formation during casting, rendering the role of Ti ineffective.

The sacrificial cladding (i.e. the second aluminium alloy) comprises 1.3-5.5 wt%, preferably 1.5-5.0 wt%, most preferably 2.0-3.0 wt% of Zn. Relatively high content of Zn is beneficial for protection against corrosion from the inside of tubes. Although high amounts of Zn may lead to increased migration of Zn into the core and making it more sensitive to corrosion from the outside, it has been found that the brazing sheet of the invention still has adequate protection against corrosion from the outside. If the content of Zn is too low the sacrificial cladding will not provide sufficient protection of the core against corrosion from the inside of tubes. Too high content of Zn decreases the melting point and can potentially also make the material more brittle and cause problems during rolling. Further, the corrosion rate may become too high.

The sacrificial cladding comprises 0.45-1.0 wt%, preferably 0.55-1.0 wt%, most preferably 0.65-0.90 wt% of Si. The presence of Si improves the strength of the cladding material by reacting with Mn. If the Si content is too low the number of AIMnSi dispersoids formed is insufficient for improving the strength to a desired level. Further, too low content of Si decreases the amount of recycled scrap that can be used for the production. Too high content of Si is undesired as it lowers the melting point of the cladding.

The sacrificial cladding comprises ≤0.4 wt%, preferably ≤0.3 wt% of Fe. The presence of small amounts of Fe cannot be avoided in practice since it is usually included as an impurity in the raw materials. Too high content of Fe leads to lower corrosion resistance of the sacrificial cladding material.

The sacrificial cladding comprises ≤0.05 wt% of Cu. The acceptable content of Cu must be low to avoid extensive pitting of the sacrificial cladding material.

The sacrificial cladding comprises 1.2-1.8 wt%, preferably 1.4-1.8 wt% of Mn. The presence of Mn improves the strength of the cladding material, as well as the resistance to erosion corrosion after brazing. At too low content of Mn sufficient amount of Mn for particle induced strengthening cannot be obtained and the number of particles for improved erosion corrosion resistance will be too low. At too high content of Mn the workability of the cladding material is deteriorated and too large intermetallic particles may be formed and negatively affect the fatigue properties.

The sacrificial cladding comprises 0.05-0.20 wt% of Zr. The presence of Zr in the sacrificial cladding serve the same purpose as in the core.

The sacrificial cladding does not comprise any Mg except as an unavoidable impurity. The presence of Mg would alter the mechanical properties and make it difficult to join the sacrificial cladding to the core in a rolling operation.

The composition of the braze cladding (i.e. the third alloy) is not critical as long as the melting point is within the desired range, preferably from 550 to 615°C. Preferably the braze cladding is an aluminium alloy comprising 4-15 wt%, most preferably 6-13 wt% of Si. Small amounts of other elements may optionally be present, such as Bi for improving the wetting and Zn for adjusting the corrosion potential, as well as unavoidable impurities. A typical braze cladding may, for example, consist of 4-15 w% Si, ≤ 0.5 wt% of Bi, ≤0.25 wt% of Cu, ≤0.1 wt% of Mn, ≤0.2 wt% of Ti, ≤0.8 wt% of Fe, ≤0.05 wt% each and ≤0.2 wt% in total of other elements, and balance Al.

The compositions of the alloys are set so the sacrificial cladding is less noble than the core. The compositions are preferably adjusted so the corrosion potential after brazing (measured according to ASTM G69) of the core alloy is 30-150 mV higher than for the sacrificial cladding.

Possible combinations of specific alloys include a core consisting of, in wt%, 0.40-0.70 Si, 0.10-0.50 Fe, 0.55-0.85 Cu, 1.0-1.6 Mn, ≤0.10 Mg, ≤0.10 Zn, 0.05-0.15 Cr, 0.05-0.15 Zr, 0.05.-0.15 Ti, balance Al and 0.05 each and in total 0.15 of other elements, said core being cladded on one side with a braze cladding as described above, and on the other side with a sacrificial cladding selected from one of:
(a) an alloy consisting of, in wt%, 0.65-1.0 Si, ≤0.40 Fe, ≤0.05 Cu, 1.4-1.8 Mn, ≤0.03 Mg, 2.3-2.7 Zn, 0.05-0.20 Zr, balance Al and 0.05 each and in total 0.15 of other elements;
(b) an alloy consisting of, in wt%, 0.47-0.82 Si, ≤0.40 Fe, ≤0.05 Cu, 1.2-1.6 Mn, ≤0.02 Mg, 4.7-5.3 Zn, 0.05-0.10 Ti, balance Al and 0.05 each and in total 0.15 of other elements;
(c) an alloy consisting of, in wt%, 0.65-1.0 Si, ≤0.40 Fe, ≤0.05 Cu, 1.4-1.8 Mn, ≤0.03 Mg, 1.3-1.7 Zn, 0.05-0.20 Zr, balance Al and 0.05 each and in total 0.15 of other elements;
(d) an alloy consisting of, in wt%, 0.50-1.0 Si, ≤0.40 Fe, ≤0.05 Cu, 1.2-1.6 Mn, ≤0.03 Mg, 3.8-4.2 Zn, ≤0.10 Ti, balance Al and 0.05 each and in total 0.15 of other elements.

Preferred temper in the delivery condition is strain hardened tempers such as H14 or H24.

Tubes made from brazing sheets of the invention can be used in any brazed heat exchanger. Examples of such heat exchangers for automotive include radiators, air condition evaporators and condensers, cabin heaters, charge air coolers, oil coolers and battery coolers. Other examples include heat exchangers for the corresponding functions in stationary heating and cooling devices.

The invention also concerns a process for the production of a brazing sheet as described above. The process comprises the steps of:
providing a core ingot of a first alloy as earlier described;
cladding the core ingot on one side with a second alloy (intended to form the sacrificial cladding) as earlier described;
cladding the core ingot on the other side with a third alloy (intended to form the braze cladding) as earlier described;
preheating the cladded ingot at a temperature from 400 to 575°C, preferably from 450 to 550°C during 1 to 25 hours;
hot rolling the preheated cladded ingot to obtain a sheet, preferably of a thickness from 2 to 10 mm;
cold rolling the sheet obtained at the hot rolling to the final thickness, preferably from 0.15 to 0.25 mm; and, optionally annealing the cold rolled sheet at a temperature from 200 to 300°C during 1 to 10 hours to the desired delivery temper, such as H24. Optionally it is possible to perform two or more cold rolling steps with one or more intermediate annealing steps.

The ingots can be provided by any suitable casting method, preferably DC casting. The degree of thickness reduction at hot rolling is preferably from 95 to 99.5%. The degree of thickness reduction at cold rolling is preferably from 90 to 98%.

For the compositions of the alloys and details of the final product the above description of the brazing sheet is referred to.

The invention further concerns the use of a brazing sheet of the invention for the manufacturing of a brazed heat exchanger.

The invention finally concerns a brazed heat exchanger made by forming tubes from a brazing sheet of the invention, assembling said tubes with fins and other parts of the heat exchanger followed by brazing to joining the tubes, fins and other parts.

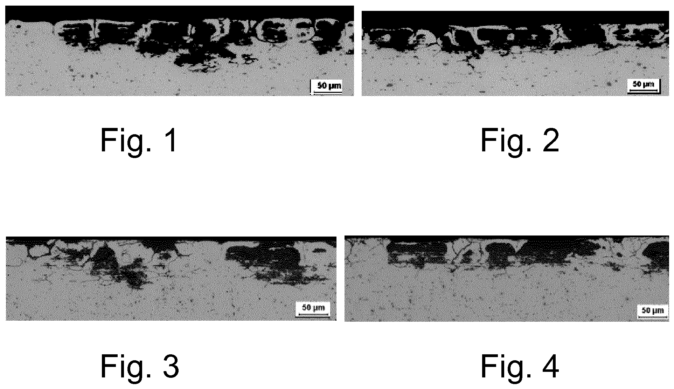

Figures 1-4 show SEM images of brazed materials produced in the Example described below. This Example is, however, not intended to limit the scope of the invention.

### Example

Four 0.22 mm gauge tube stock materials were produced using a process route that consisted of (a) DC Casting core alloy ingots (b) cladding the core alloy with AA4343 braze alloy on one side with a clad ratio of 9 ± 2.0% (c) cladding the core on the other side with a sacrificial alloy with a clad ratio of 5 ± 1.5% (d): preheating the sandwich assembly to a temperature in the range 500°C for 15 hours prior to hot rolling; (e) hot rolling (f) cold rolling to 0.22 mm gauge and (f): a final partial annealing at 250°C for 3 hours. The chemical compositions in wt% of the layers in each material are shown in Table 1.

**Table 1: compositions of Materials A through D**

| Material | Layer | Si | Fe | Cu | Mn | Cr | Zn | Zr | Ti |
|---|---|---|---|---|---|---|---|---|---|
| A (comparative) | Core | 0.57 | 0.28 | 0.52 | 1.38 | - | 0.04 | - | 0.13 |
| | Sacrificial cladding (5%) | 0.2 | 0.35 | 0.01 | 0.09 | - | 1.04 | - | 0.03 |
| | Braze cladding (7%) | 7.9 | 0.16 | - | - | - | 0.01 | - | - |
| B (comparative) | Core | 0.52 | 0.28 | e | 1.29 | 0.1 | 0.04 | 0.09 | 0.11 |
| | Sacrificial cladding (5%) | 0.18 | 0.35 | - | 0.07 | - | 0.99 | - | 0.03 |
| | Braze cladding (7%) | 7.8 | 0.19 | 0.03 | 0.01 | - | 0.02 | - | - |
| C (comparative) | Core | 0.56 | 0.29 | 0.53 | 1.42 | - | 0.09 | - | 0.13 |
| | Sacrificial cladding (5%) | 0.83 | 0.25 | 0.03 | 1.6 | - | 2.5 | 0.13 | 0.03 |
| | Braze cladding (10%) | 8 | 0.14 | - | - | - | 0.02 | - | - |
| D (invention) | Core | 0.55 | e | 0.66 | 1.28 | 0.08 | 0.04 | 0.08 | 0.09 |
| | Sacrificial cladding (5%) | 0.83 | 0.25 | 0.03 | 1.58 | - | 2.5 | 0.13 | 0.03 |
| | Braze cladding (10%) | 8 | 0.14 | - | - | - | 0.02 | - | - |

The core alloys are the same in Materials A and C, as well as in Materials B and D, respectively. Similarly, the sacrificial cladding alloys are the same in Materials A and B, as well as in Materials C and D, respectively. The braze cladding alloys are the same in all the Materials. The slight differences in the exact compositions are due to inevitable variations in the production of the alloys and do not change the properties of the final materials. Similarly, the slight differences in clad ratio of the braze claddings do not change the corrosion properties of the materials after brazing.

Coupon samples from the above materials were brazed in a laboratory Nocolok brazing furnace at 600°C for 3 minutes. Before brazing, each sample was cleaned by NaHCO₃ solution and ethanol. After brazing, 10 mm size disc samples from each material were cut out and placed in a three electrode cell arrangement consisting of a platinum grid as counter electrode, SCE electrode as reference and the aluminium sample as the working electrode. The samples were then investigated for their corrosion resistances using cyclic voltammetry scanning.

The cell with the inserted sample was first rinsed using SWAAT solution according to ASTM D1141-98, pH 2.8-2.9, and subsequently refilled with 300 ml of the SWAAT solution. Prior to the cyclic voltammetry scanning, N₂ gas was bubbled through the solution for 20 minutes at a rate of 300 ml/min (1ml/) and followed by an OCP measurement for 10 minutes.

The scanning was carried out as follows: Polarization in the positive direction starting from - 0.05 V vs OCP to 0.30 V vs OCP which was subsequently reversed to -0.05V vs OCP using a scanning rate of 1mV/s. Cycles were carried out without any time gap between any two successive cycles. The scanned samples were immersed in HNO₃ acid for 10 min, cleaned by deionized water and used for metallography analysis.

SEM images of the respective material after the tenth cycle are reproduced in Figures 1-4 and show the corrosion at the side of the braze cladding. Fig. 1 shows Material 1, Fig. 2 shows Material B, Fig. 3 shows Material C and Fig. 4 shows Material D.

It appears that Material D according to the invention has been more evenly corroded with less deep pits compared to the other materials. Such corrosion is less severe since penetration of the material then takes longer time.

## Claims

1. A brazing sheet comprising a core layer made of a first aluminium alloy, attached to one side of said core layer a sacrificial cladding made of a second aluminium alloy, attached to the other side of said core layer a braze cladding made of a third aluminium alloy, wherein said first aluminium alloy consists of:
| | |
|---|---|
| Si | 0.2-1.0 wt% |
| Fe | 0.15-1.0 wt% |
| Cu | 0.2-0.9 wt% |
| Mn | 1.0-1.6 wt% |
| Mg | ≤0.3 wt% |
| Cr | 0.05-0.15 wt% |
| Zr | 0.05-0.25 wt% |
| Ti | 0.05-0.25 wt% |
| Other elements | ≤0.05 wt% each and ≤0.2 wt% in total |
| Al | balance up to 100 wt%; |
said second aluminium alloy consists of:
| | |
|---|---|
| Si | 0.45-1.0 wt% |
| Fe | ≤0.4 wt% |
| Cu | ≤0.05 wt% |
| Mn | 1.2-1.8 wt% |
| Ti | ≤0.10 wt% |
| Zn | 1.3-5.5 wt% |
| Zr | 0.05-0.20 wt% |
| Other elements | ≤0.05 wt% each and ≤0.2 wt% in total |
| Al | balance up to 100 wt%; |
and, said third aluminium alloy has a melting point lower than said first and second aluminium alloys.

2. Brazing sheet as claimed in claim 1, wherein the second alloy comprises 2.0-3.0 wt% of Zn.

3. Brazing sheet as claimed in any one of the claims 1-2, wherein the first alloy comprises >0.20 wt% of Si.

4. Brazing sheet as claimed in claim 3, wherein the first alloy comprises 0.30-1.0 wt% of Si.

5. Brazing sheet as claimed in any one of the claims 1-4, wherein the first alloy comprises >0.2-0.7 wt% of Fe.

6. Brazing sheet as claimed in any one of the claims 1-5, wherein, after brazing, the core, the residual braze cladding, or both, contains intermetallic particles comprising Al, Fe, Mn, Cu and Cr.

7. Brazing sheet as claimed in any one of the claims 1-6, wherein the third alloy is an aluminium alloy comprising 4-15 wt% of Si.

8. Brazing sheet as claimed in any one of the claims 1-7, wherein the thickness of the brazing sheet is from 0.15 to 0.25 mm.

9. Brazing sheet as claimed in claim 8, wherein the thickness of the brazing sheet is from 0.18 to 0.22 mm.

10. Brazing sheet as claimed in any one of the claims 1-9, wherein the contents of Si and Mn in the first alloy are set so no sacrificial brown band is formed at brazing.

11. Brazing sheet as claimed in any one of the claims 1-10, wherein the brazing sheet is a three layer material with no further layers in addition to the core, the sacrificial cladding and the braze cladding.

12. Brazing sheet as claimed in any one of the claims 1-11, wherein the thickness of the sacrificial cladding constitutes from 3 to 20 % of the total thickness of the brazing sheet.

13. A process for the production of a brazing sheet according to any one of the claims 1-12 comprising the steps of
providing a core ingot of a first alloy as defined in claim 1;
cladding the core ingot on one side with a second alloy as defined in claim 1;
cladding the core ingot on the other side with a third alloy as defined in claim 1; preheating the cladded ingot at a temperature from 400 to 575°C during 1 to 25 hours;
hot rolling the preheated cladded ingot to obtain a sheet; and,
cold rolling the sheet obtained at the hot rolling to the final thickness.

14. Use of a brazing sheet according to any one of the claims 1-12 in the production of a brazed heat exchanger.

15. A brazed heat exchanger made by forming tubes from a brazing sheet according to any one of the claims 1-12, assembling said tubes with fins and other parts of the heat exchanger followed by brazing.

## Patentansprüche

1. Lötblech, umfassend eine Kernschicht, hergestellt aus einer ersten Aluminiumlegierung, eine an einer Seite der Kernschicht angebrachten Opferbeschichtung, hergestellt aus einer zweiten Aluminiumlegierung, eine an der anderen Seite der Kernschicht angebrachten Lötbeschichtung, hergestellt aus einer dritten Aluminiumlegierung, wobei die erste Aluminiumlegierung besteht aus:
| | |
|---|---|
| Si | 0,2-1,0 Gew.-% |
| Fe | 0,15-1,0 Gew.-% |
| Cu | 0,2-0,9 Gew.-% |
| Mn | 1,0-1,6 Gew.-% |
| Mg | ≤0,3 Gew.-% |
| Cr | 0,05-0,15 Gew.-% |
| Zr | 0,05-0,25 Gew.-% |
| Ti | 0,05-0,25 Gew.-% |
| Anderen Elementen | jeweils ≤0,05 Gew.-% und gesamt ≤0,2 Gew.-% |
| Al | Rest auf 100 Gew.-%; |
wobei die zweite Aluminiumlegierung besteht aus:
| | |
|---|---|
| Si | 0,45-1,0 Gew.-% |
| Fe | ≤0,4 Gew.-% |
| Cu | ≤0.05 Gew.-% |
| Mn | 1,2-1,8 Gew.-%. |
| Ti | ≤0,10 Gew.-% |
| Zn | 1,3-5,5 Gew.-% |
| Zr | 0,05-0,20 Gew.-% |
| Anderen Elementen | jeweils ≤0,05 Gew.-% und gesamt ≤0,2 Gew.-% |
| Al | Rest auf 100 Gew.-%; |
und wobei die dritte Aluminiumlegierung einen niedrigeren Schmelzpunkt aufweist als die erste und zweite Aluminiumlegierung.

2. Lötblech nach Anspruch 1, wobei die zweite Legierung 2,0-3,0 Gew.-% Zn umfasst.

3. Lötblech nach einem der Ansprüche 1-2, wobei die erste Legierung >0,20 Gew.-% Si umfasst.

4. Lötblech nach Anspruch 3, wobei die erste Legierung 0,30-1,0 Gew.-% Si umfasst.

5. Lötblech nach einem der Ansprüche 1-4, wobei die erste Legierung >0.2-0,7 Gew.-% Fe umfasst.

6. Lötblech nach einem der Ansprüche 1-5, wobei nach dem Löten der Kern, die Restlötbeschichtung oder beides intermetallische Partikel enthält, die Al, Fe, Mn, Cu und Cr umfassen.

7. Lötblech nach einem der Ansprüche 1-6, wobei die dritte Legierung eine Aluminiumlegierung ist, welche 4-15 Gew.-% Si umfasst.

8. Lötblech nach einem der Ansprüche 1-7, wobei die Dicke des Lötblechs von 0,15 bis 0,25 mm beträgt.

9. Lötblech nach Anspruch 8, wobei die Dicke des Lötblechs von 0,18 bis 0,22 mm beträgt.

10. Lötblech nach einem der Ansprüche 1-9, wobei die Inhalte von Si und Mn in der ersten Legierung so festgelegt sind, dass kein Opferbraunband während des Lötens gebildet wird.

11. Lötblech nach einem der Ansprüche 1-10, wobei das Lötblech ein dreischichtiges Material ohne weitere Schichten zusätzlich zu dem Kern, der Opferbeschichtung und der Lötbeschichtung ist.

12. Lötblech nach einem der Ansprüche 1-11, wobei die Dicke der Opferbeschichtung 3 bis 20 % der Gesamtdicke des Lötblechs beträgt.

13. Verfahren zur Herstellung eines Lötblechs nach einem der Ansprüche 1-12, umfassend die Schritte von
Bereitstellen eines Kernblocks einer ersten Legierung nach Anspruch 1;
Beschichten des Kernblocks auf einer Seite mit einer zweiten Legierung nach Anspruch 1;
Beschichten des Kernblocks auf der anderen Seite mit einer dritten Legierung nach Anspruch 1;
Vorwärmen des beschichteten Blocks bei einer Temperatur von 400 bis 575 °C während 1 bis 25 Stunden;
Warmwalzen des vorgewärmten beschichteten Blocks, um ein Blech zu erhalten; und
Kaltwalzen des während des Warmwalzens erhaltenen Blechs auf die endgültige Dicke.

14. Verwendung eines Lötblechs nach einem der Ansprüche 1-12 in der Herstellung eines gelöteten Wärmetauschers.

15. Gelöteter Wärmetauscher, welcher durch Bilden von Rohren aus einem Lötblech nach einem der Ansprüche 1-12 hergestellt wurde, Anordnen der Rohre mit Rippen und anderen Teilen des Wärmetauschers nach dem Löten.

## Revendications

1. Feuille de brasage comprenant une couche de coeur constituée d'un premier alliage d'aluminium, une gaine sacrificielle fixée à une face de ladite couche de coeur, constituée d'un deuxième alliage d'aluminium, une gaine de brasage fixée à l'autre face de ladite couche de coeur, constituée d'un troisième alliage d'aluminium, dans lequel ledit premier alliage d'aluminium consiste en :
| | |
|---|---|
| Si | 0,2 à 1,0 % en poids |
| Fe | 0,15 à 1,0 % en poids |
| Cu | 0,2 à 0,9 % en poids |
| Mn | 1,0 à 1,6 % en poids |
| Mg | ≤ 0,3 % en poids |
| Cr | 0,05 à 0,15 % en poids |
| Zr | 0,05 à 0,25 % en poids |
| Ti | 0,05 à 0,25 % en poids |
| Autres éléments | ≤ 0,05 % en poids chacun et ≤ 0,2 % en poids au total |
| Al | balance jusqu'à 100 % en poids ; |
ledit second alliage d'aluminium est constitué de :
| | |
|---|---|
| Si | 0,45 à 1,0 % en poids |
| Fe | ≤ 0,4 % en poids |
| Cu | ≤ 0,05 % en poids |
| Mn | 1,2 à 1,8 % en poids |
| Ti | ≤ 0,10 % en poids |
| Zn | 1,3 à 5,5 % en poids |
| Zr | 0,05 à 0,20 % en poids |
| Autres éléments | ≤ 0,05 % en poids chacun et ≤ 0,2 % en poids au total |
| Al | balance jusqu'à 100 % en poids ; |
et ledit troisième alliage d'aluminium a un point de fusion inférieur auxdits premier et second alliages d'aluminium.

2. Feuille de brasage selon la revendication 1, dans laquelle le deuxième alliage comprend 2,0 à 3,0 % en poids de Zn.

3. Feuille de brasage selon l'une quelconque des revendications 1 et 2, dans laquelle le premier alliage comprend > 0,20 % en poids de Si.

4. Feuille de brasage selon la revendication 3, dans laquelle le premier alliage comprend 0,30 à 1,0 % en poids de Si.

5. Feuille de brasage selon l'une quelconque des revendications 1 à 4, dans laquelle le premier alliage comprend > 0,2 à 0,7 % en poids de Fe.

6. Feuille de brasage selon l'une quelconque des revendications 1 à 5, dans laquelle, après brasage, le coeur, la gaine de brasage résiduelle, ou les deux, contiennent des particules intermétalliques comprenant Al, Fe, Mn, Cu et Cr.

7. Feuille de brasage selon l'une quelconque des revendications 1 à 6, dans laquelle le troisième alliage est un alliage d'aluminium comprenant 4 à 15 % en poids de Si.

8. Feuille de brasage selon l'une quelconque des revendications 1 à 7, dans laquelle l'épaisseur de la feuille de brasage est de 0,15 à 0,25 mm.

9. Feuille de brasage selon la revendication 8, dans laquelle l'épaisseur de la feuille de brasage est de 0,18 à 0,22 mm.

10. Feuille de brasage selon l'une quelconque des revendications 1 à 9, dans laquelle les teneurs en Si et Mn dans le premier alliage sont fixées de sorte qu'aucune bande brune sacrificielle ne soit formée au niveau du brasage.

11. Feuille de brasage selon l'une quelconque des revendications 1 à 10, dans laquelle la feuille de brasage est un matériau à trois couches sans aucune couche supplémentaire en plus du coeur, de la gaine sacrificielle et de la gaine de brasage.

12. Feuille de brasage selon l'une quelconque des revendications 1 à 11, dans laquelle l'épaisseur de la gaine sacrificielle constitue 3 à 20 % de l'épaisseur totale de la feuille de brasage.

13. Procédé de fabrication d'une feuille de brasage selon l'une quelconque des revendications 1 à 12, comprenant les étapes consistant à
fournir un lingot de coeur d'un premier alliage tel que défini dans la revendication 1 ;
revêtir le lingot de coeur d'un premier côté avec un deuxième alliage tel que défini dans la revendication 1 ;
revêtir le lingot de coeur de l'autre côté avec un troisième alliage tel que défini dans la revendication 1 ;
préchauffer le lingot gainé à une température de 400 à 575°C pendant 1 à 25 heures ;
laminer à chaud le lingot gainé préchauffé pour obtenir une feuille ; et,
laminer à froid la feuille obtenue lors du laminage à chaud jusqu'à l'épaisseur finale.

14. Utilisation d'une feuille de brasage selon l'une quelconque des revendications 1 à 12 dans la fabrication d'un échangeur de chaleur brasé.

15. Echangeur de chaleur brasé réalisé en formant des tubes à partir d'une feuille de brasage selon l'une quelconque des revendications 1 à 12, en assemblant lesdits tubes avec des ailettes et d'autres parties de l'échangeur de chaleur, puis en brasant.
